# EUROPÄISCHE PATENTANMELDUNG

(11) **EP 1 127 922 A1**
(43) Veröffentlichungstag der Anmeldung: **29.08.2001**
(21) Anmeldenummer: 00811214.6
(22) Anmeldetag: 20.12.2000
(51) Int. Cl.: C09B 1/32, C09B 1/58, C09B 69/04, C08K 5/18, C08K 5/36

(54) **Pigmentfarbstoffe zum Färben von synthetischen Materialien in der Masse**

(30) Priorität: 29.12.1999 EP 99811217
(71) Anmelder: Ciba Specialty Chemicals Holding Inc., 4057 Basel (CH)
(72) Erfinder: Adam, Jean-Marie, 68300 Rosenau (FR)

(57) **Zusammenfassung**

Die vorliegende Anmeldung betrifft Pigmentfarbstoffe der Formel 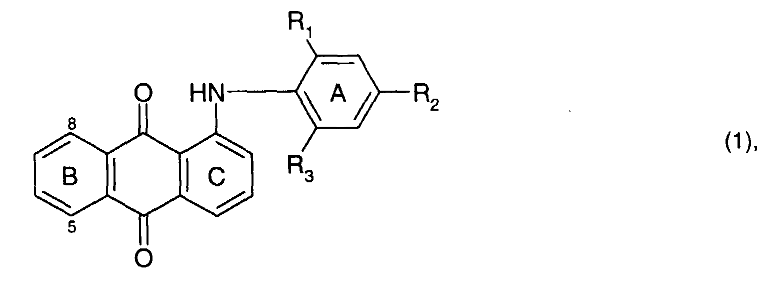 worin R₁ C₁-C₆-Alkyl, C₁-C₆-Alkoxy, Phenoxy oder Halogen, R₂ Wasserstoff, C₁-C₆-Alkyl, C₁-C₆-Alkoxy, Phenoxy, Halogen, Acylamino, -CH₂NHAcyl oder der Rest 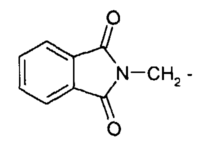 und R₃ C₁-C₆-Alkyl, C₁-C₆-Alkoxy, Phenoxy oder Halogen sind, der Ring A gegebenenfalls weiter durch -SO₃⁻M⁺ substituiert sein kann, worin M⁺ ein Kation ist und die Ringe B und C unsubstituiert oder ein oder mehrfach durch Halogen, Hydroxy, -SH, Amino, C₁-C₆-Alkyl-amino, C₁-C₆-Alkyl, C₁-C₆-Alkoxy, Phenoxy, Acylamino, C₁-C₆-Thioalkyl oder Thiophenyl weitersubstituiert sein können und der Ring B in Position 5 oder 8 durch einen Rest der Formel 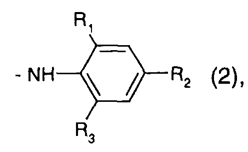 worin R₁, R₂ und R₃ die vorderhand angegebene Bedeutung haben, substituiert sein kann,
Verfahren zu ihrer Herstellung und ihre Verwendung zum Färben von von synthetischen Materialien in der Masse.

## Beschreibung

Die vorliegende Erfindung betrifft neue Pigmentfarbstoffe, ihre Herstellung und ihre Verwendung zum Färben von synthetischen Materialien in der Masse.

Pigmentfarbstoffe und ihre Verwendung zum Massenfärben von synthetischen Materialien sind bekannt. Es hat sich jedoch gezeigt, dass diese Farbstoffe den höchsten Ansprüchen, insbesondere im Bezug auf die Lichtechtheit, Thermostabilität und/oder Farbstärke, nicht immer vollauf genügen. Es besteht daher Bedarf nach neuen Pigmentfarbstoffen, welche lichtechte, thermostabile und farbstarke Färbungen ergeben und gute allgemeine Echtheiten zeigen.

Es wurde nun überraschenderweise gefunden, dass die erfindungsgemässen Pigmentfarbstoffe die oben angegebenen Kriterien weitgehend erfüllen.

Gegenstand der vorliegenden Erfindung sind somit die Pigmentfarbstoffe der Formel 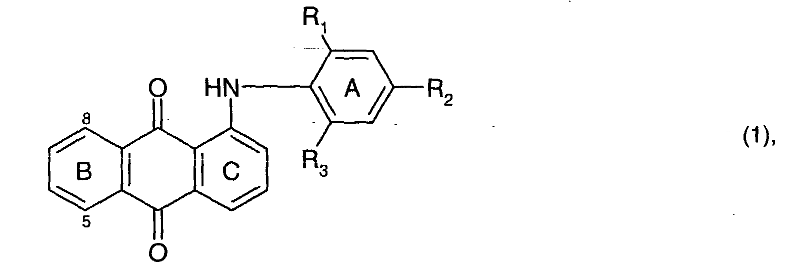 worin
R₁ C₁-C₆-Alkyl, C₁-C₆-Alkoxy, Phenoxy oder Halogen,
R₂ Wasserstoff, C₁-C₆-Alkyl, C₁-C₆-Alkoxy, Phenoxy, Halogen, Acylamino, -CH₂NHAcyl oder der Rest 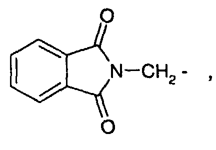 und
R₃ C₁-C₆-Alkyl, C₁-C₆-Alkoxy, Phenoxy oder Halogen sind,
   der Ring A gegebenenfalls weiter durch -SO₃⁻M⁺ substituiert sein kann, worin M⁺ ein Kation ist und die Ringe B und C unsubstituiert oder ein oder mehrfach durch Halogen, Hydroxy, -SH, Amino, C₁-C₆-Alkylamino, C₁-C₆-Alkyl, C₁-C₆-Alkoxy, Phenoxy, Acylamino, C₁-C₆-Thioalkyl oder Thiophenyl weitersubstituiert sein können und der Ring B in Position 5 oder 8 durch einen Rest der Formel 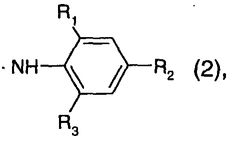 worin R₁, R₂ und R₃ die vorderhand angegebene Bedeutung haben, substituiert sein kann.

R₁, R₂ und R₃ als C₁-C₆-Alkyl sind z.B. Methyl, Ethyl, Propyl, Isopropyl, n-Butyl, iso-Butyl, sec-Butyl, tert-Butyl, Amyl, tert.-Amyl (1,1-Dimethylpropyl), 1,1,3,3-Tetramethylbutyl, Hexyl, 1-Methylpentyl, Neopentyl, Cyclopentyl, Cyclohexyl, sowie die dazugehörenden Isomeren. R₁, R₂ und R₃ als C₁-C₄-Alkoxy sind z.B. Methoxy, Ethoxy, Propoxy oder Butoxy.
R₁, R₂ und R₃ als Halogen sind z.B. Chlor, Brom oder Jod und vorzugsweise Chlor.
Acyl in Acylamino oder der Formel -CH₂NHAcyl bedeutet bevorzugt Formyl, Acetyl, Chloracetyl, Acryl oder Propionyl.
C₁-C₆-Thioalkyl als Substituent der Ringe B und/oder C bedeutet beispielsweise Methylthio, Ethylthio, Propylthio oder Butylthio.
R₁ ist bevorzugt Ethyl oder Brom und insbesondere Methyl.
R₂ ist bevorzugt Wasserstoff, Ethyl, Phenoxy und insbesondere Methyl.
R₃ ist bevorzugt Ethyl oder Brom und insbesondere Methyl.

Das Kation M⁺ ist z.B. Na⁺, Li⁺, K⁺, Ca²⁺, Mg²⁺, Sr²⁺, Al³⁺ oder Kation eines organischen Amins wie z.B. Ethylendiamin, Diethylentriamin, Triethanolamin, Triisopropanolamin, Cyclohexylamin, Hexamethylendiamin, Rosin Amin D und Primen 81 R.

Bevorzugt sind Pigmentfarbstoffe der Formel (1) bei welchen der Ring B durch Chlor substituiert ist und insbesondere solche, bei welchen der Ring B unsubstituiert oder in der Position 5 oder 8 durch den Rest der Formel 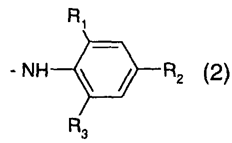 substituiert ist, wobei für R₁, R₂ und R₃ die vorderhand genannten Bedeutungen und Bevorzugungen gelten.
Ebenfalls bevorzugt sind Pigmentfarbstoffe der Formel (1), bei welchen der Ring C unsubstituiert oder durch Brom substituiert ist.

Besonders bevorzugt sind die Pigmentfarbstoffe der Formel (1) bei welchen der Ring B unsubstituiert oder in der Position 5 oder 8 durch den Rest der Formel 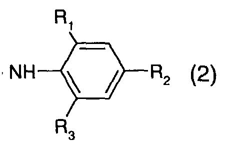 substituiert ist, wobei R₁, R₂ und R₃ Methyl sind und der Ring C unsubstituiert ist.

Ganz besonders bevorzugt sind PigmentFarbstoffe der Formel (1) bei welchen der Ring B unsubstituiert oder in der Position 5 durch den Rest der Formel 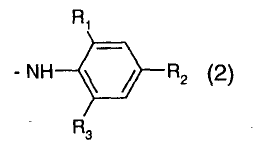 substituiert ist, wobei R₁, R₂ und R₃ Methyl sind und der Ring C unsubstituiert ist.

Die Herstellung der erfindungsgemässen Pigmentfarbstoffe der Formel (1) geschieht beispielsweise in der Weise dass man 1-Chlor-, 1-Nitro- oder 1-Sulfoanthrachinon mit einem Äquivalent einer Verbindung der Formel 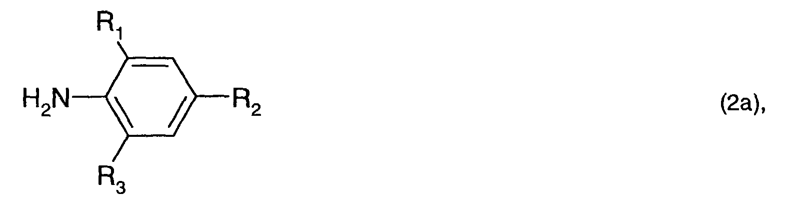 worin R₁, R₂ und R₃ die unter der Formel (1) angegebenen Bedeutungen haben, in Gegenwart von Alkaliacetat, Kupfer und/oder Kupfersalzen und gegebenenfalls in einem organischen Lösungsmittel umsetzt, oder dass man 1,5- oder 1,8-Dichlor-, 1,5- oder 1,8-Dinitro- oder 1,5- oder 1,8-Disulfoanthrachinon mit zwei Äquivalenten einer Verbindung der Formel (2a) in Gegenwart von Alkaliacetat, Kupfer und/oder Kupfersalzen und gegebenenfalls in einem organischen Lösungsmittel umsetzt, und die entstehende Verbindung gegebenenfalls nach üblichen Methoden weitersubstituiert.
Die Verbindungen der Formel (2a) sind bekannt oder können nach bekannten Methoden hergestellt werden.

Einen weiteren Gegenstand der vorliegenden Erfindung stellt ein Verfahren zur Herstellung gefärbter Kunststoffe oder polymerer Farbpartikel dar, welches dadurch gekennzeichnet ist, dass man ein hochmolekulares organisches Material und eine färberisch wirksame Menge mindestens eines Pigmentfarbstoffes der Formel (1) miteinander vermischt.
Die Einfärbung der hochmolekularen, organischen Substanzen mit dem Pigmentfarbstoff der Formel (1) erfolgt beispielsweise derart, dass man einen solchen Pigmentfarbstoff diesen Substraten unter Verwendung von Walzwerken, Misch- oder Mahlapparaten zumischt, wodurch der Pigmentfarbstoff im hochmolekularen Material gelöst oder fein verteilt wird. Das hochmolekulare organische Material mit dem beigemischten Pigmentfarbstoff wird hierauf nach an sich bekannten Verfahren verarbeitet, wie beispielsweise Kalandrieren, Pressen, Strangpressen, Streichen, Spinnen, Giessen oder durch Spritzguss, wodurch das eingefärbte Material seine endgültige Form bekommt. Das Beimischen des Pigmentfarbstoffes kann auch unmittelbar vor dem eigentlichen Verarbeitungsschritt durchgeführt werden, indem beispielsweise ein fester, beispielsweise pulverförmiger Pigmentfarbstoff und ein granuliertes oder pulvriges hochmolekulares organisches Material, sowie gegebenenfalls auch Zusatzstoffe wie beispielsweise Additive, gleichzeitig direkt der Einlasszone einer Strangpresse kontinuierlich zudosiert werden, wo das Einmischen noch knapp vor der Verarbeitung stattfindet. Im allgemeinen ist jedoch ein vorgängiges Einmischen des Pigmentfarbstoffes ins hochmolekulare organische Material bevorzugt, da gleichmässiger gefärbte Substrate erhalten werden können.
Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können zum Beispiel Ester der Phosphorsäure, Phthalsäure oder Sebacinsäure dienen. Die Weichmacher können im erfindungsgemässen Verfahren vor oder nach der Einverleibung des Farbmittels in die Polymeren eingearbeitet werden. Es ist ferner möglich, zwecks Erzielung verschiedener Farbtöne den hochmolekularen, organischen Stoffen neben dem Pigmentfarbstoff der Formel (1) auch weitere Pigmente oder andere Farbmittel in beliebigen Mengen zuzufügen, gegebenenfalls zusammen mit weiteren Zusatzstoffen wie z.B. Füllmitteln oder Siccativen.
Bevorzugt ist die Einfärbung von thermoplastischen Kunststoffen insbesondere in Form von Fasern. Bevorzugte, erfindungsgemäss einfärbbare hochmolekulare organische Materialien sind ganz allgemein Polymere mit einer Dielektrizitätskonstante ≥ 2,5, insbesondere Polyester, Polycarbonat (PC), Polystyrol (PS), Polymethylmethacrylat (PMMA), Polyamid, Polyethylen, Polypropylen, Styrol/Acrylnitril (SAN) oder Acrylnitril/Butadien/Styrol (ABS). Besonders bevorzugt sind Polyester und Polyamid. Ganz besonders bevorzugt sind lineare aromatische Polyester, welche durch Polykondensation von Terephthalsäure und Glykolen, insbesondere Ethylenglykol oder Kondensationsprodukten aus Terephthalsäure und 1,4-Bis-(hydroxymethyl)-cyclohexan erhalten werden können, wie beispielsweise Polyethylenterephthalat (PET) oder Polybutylenterephthalat (PBTP); ferner Polycarbonate, z.B. solche aus α,α-Dimethyl-4,4-dihydroxy-diphenylmethan und Phosgen, oder Polymere auf Polyvinylchlorid- sowie Polyamid-Basis, wie z.B. Polyamid 6 oder Polyamid 6.6.

Die erfindungsgemässen Pigmentfarbstoffe verleihen den vorderhand genannten Materialien, vor allem den Polyester- und Polyamidmaterialien, farbstarke, egale Farbtöne mit sehr guten Gebrauchsechtheiten, insbesondere eine gute Lichtechtheit und eine gute Thermostabilität.

Die nachfolgenden Beispiele dienen der Veranschaulichung der Erfindung. Darin sind, sofern nicht anders angegeben, die Teile Gewichtsteile und die Prozente Gewichtsprozente. Die Temperaturen sind in Celsiusgraden angegeben. Die Beziehung zwischen Gewichtsteilen und Volumenteilen ist dieselbe wie zwischen Gramm und Kubikzentimeter.

### Beispiel 1:

12,1 Gewichtsteile 1-Chloranthrachinon werden zusammen mit 13,5 Gewichtsteilen Mesidin, 5,0 Gewichtsteilen Kaliumacetat, 0,1 Gewichtsteilen Kupfer und 0,1 Gewichtsteilen Kupferchlorür in 60,0 Gewichtsteilen 1-Pentanol 6 Std. bei 130°C gerührt. Das Reaktionsgemisch wird abgekühlt und das ausgefallene Produkt wird abgenutscht und mit wenig 1-Pentanol gewaschen. Man erhält 13,0 Gewichtsteile des Farbstoffes der Formel 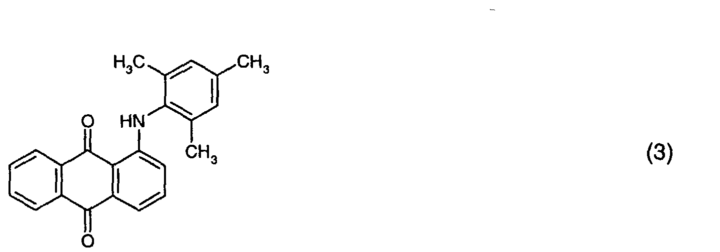 Der Farbstoff färbt Polyester und Polyamid in der Masse in brillanten, lichtechten roten Tönen.

Ersetzt man im Beispiel 1 13,5 Gewichtsteile Mesidin durch äquivalente Mengen eines in der Tabelle 1 in der Kolonne 3 angegebenen Amins und/oder 12,1 Gewichtsteile 1-Chloranthrachinon durch äquivalente Mengen eines in der Tabelle 1 in der Kolonne 2 angegebenen Anthrachinonderivates, so erhält man ebenfalls Farbstoffe mit guten Eigenschaften.

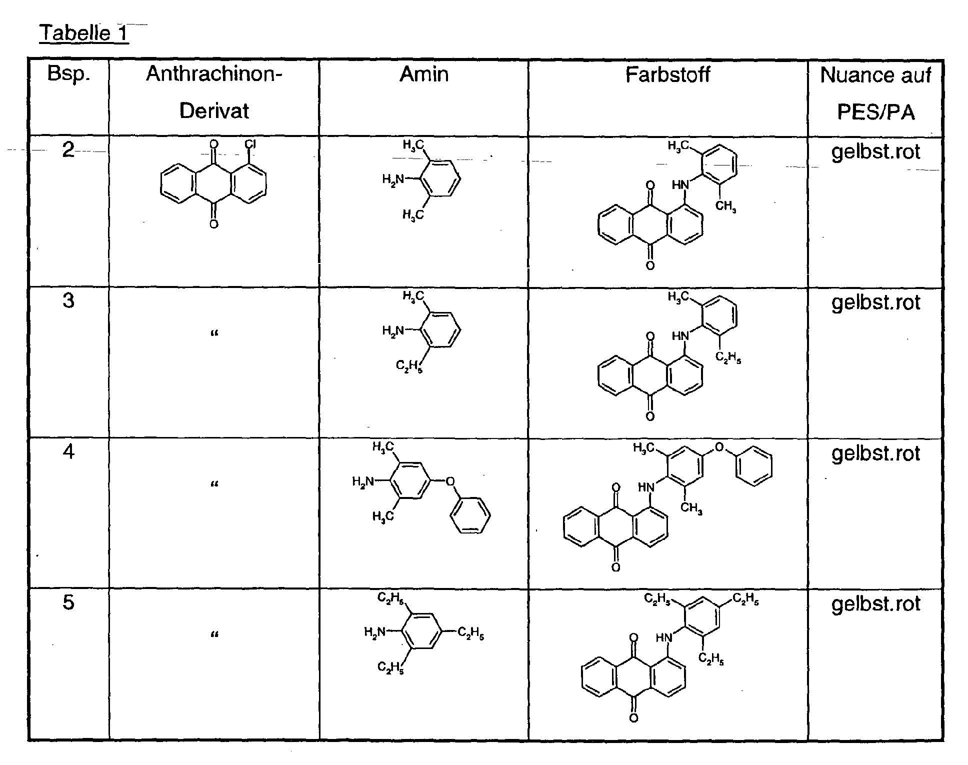

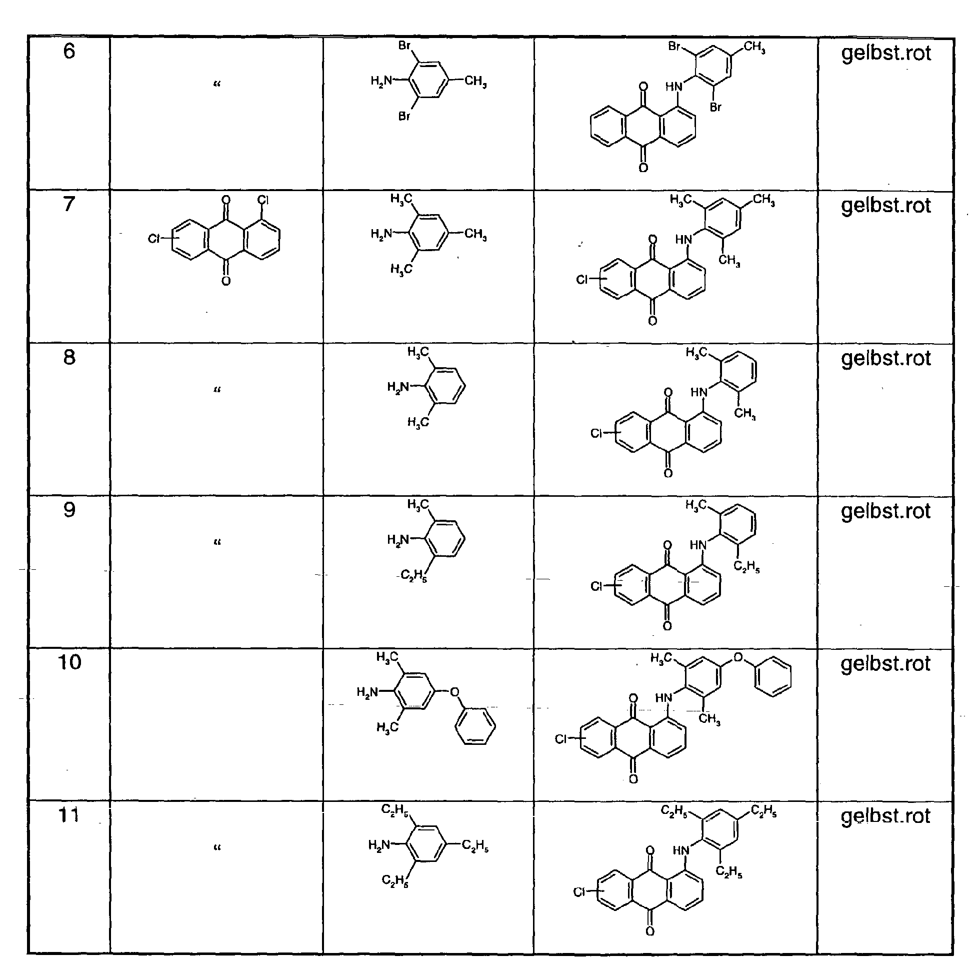

### Beispiel 12

12,1 Gewichtsteile 1-Chloranthrachinon werden zusammen mit 12,0 Gewichtsteilen 2,4-Xylidin, 5,0 Gewichtsteilen Kaliumacetat, 0,1 Gewichtsteilen Kupfer und 0,1 Gewichtsteilen Kupferchlorür in 60,0 Gewichtsteilen 1-Pentanol 6 Std. bei 130°C gerührt. Das Reaktionsgemisch wird abgekühlt und das ausgefallene Produkt wird abgenutscht und mit wenig 1-Pentanol gewaschen. Man erhält 13,5 Gewichtsteile der Verbindung der Formel

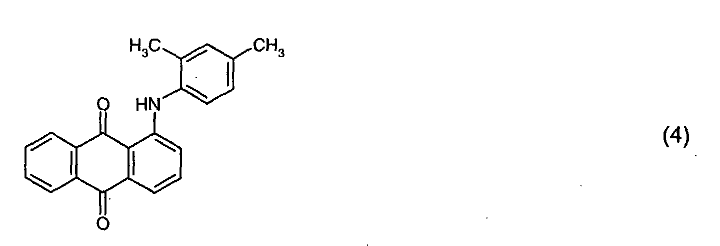

8,2 Gewichtsteile der Verbindung der Formel (4), werden in 100,0 Gewichtsteilen Chlorbenzol bei 35°C mit 4,5 Gewichtsteilen Brom versetzt. Man rührt noch 12 Std. bei 35°C, nutscht das Reaktionsprodukt ab und wäscht den Rückstand mit wenig Chlorbenzol. Man erhält 10,0 Gewichtsteile des Farbstoffes der Formel

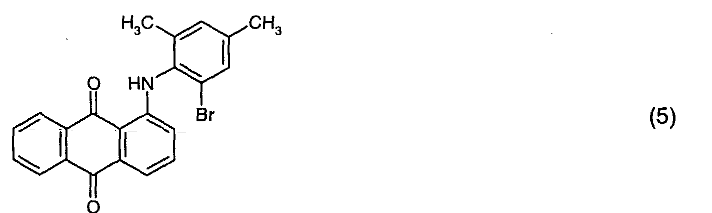

Der Farbstoff färbt Polyester und PoByamid in der Masse in brillanten, lichtechten roten Tönen.

Analog zu Beispiel 12 werden die in der Tabelle 2 angegebenen Produkte hergestellt

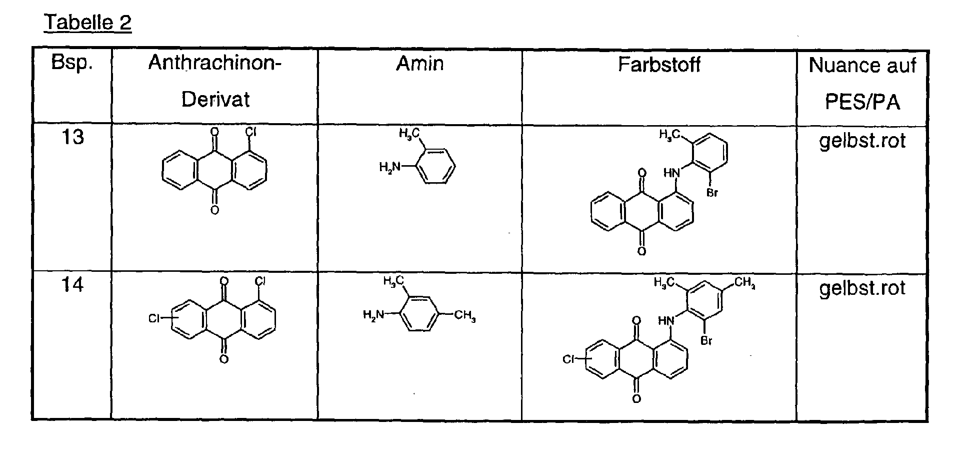

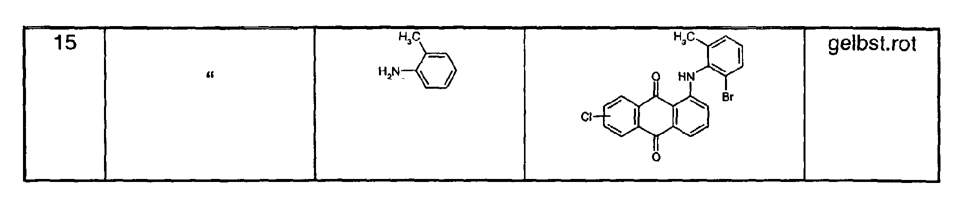

### Beispiel 16

12,1 Gewichtsteile 1-Chloranthrachinon werden zusammen mit 10,7 Gewichtsteilen p-Toluidin, 5,0 Gewichtsteilen Kaliumacetat, 0,1 Gewichtsteilen Kupfer und 0,1 Gewichtsteilen Kupferchlorür in 60,0 Gewichtsteilen 1-Pentanol 6 Std. bei 130°C gerührt. Das Reaktionsgemisch wird abgekühlt und das ausgefallene Produkt abgenutscht und mit wenig 1-Pentanol gewaschen. Man erhält 12,0 Gewichtsteile der Verbindung der Formel

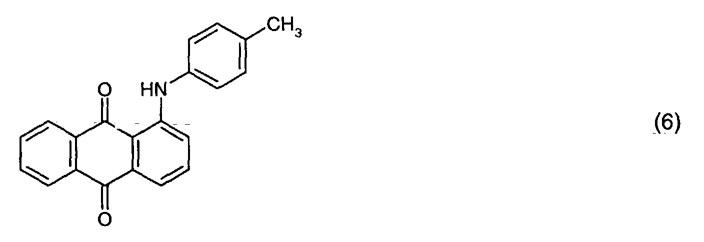

7,8 Gewichtsteile der Verbindung der Formel (6), werden in 100,0 Gewichtsteilen Chlorbenzol bei 35°C mit 13,0 Gewichtsteilen Brom versetzt. Man rührt noch 12 Std. bei 35°C, nutscht das Reaktionsprodukt ab und wäscht den Rückstand mit wenig Chlorbenzoi. Man erhält 13,0 Gewichtsteile des Farbstoffes der Formel

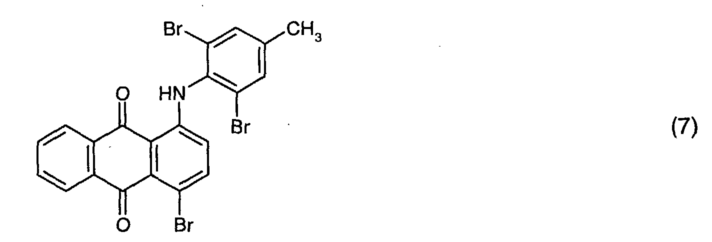

Der Farbstoff färbt Polyester und Polyamid in der Masse in brillanten, lichtechten roten Tönen.

In Analogie zum Beispiel 16 können die in der Tabelle 3 angegebenen Produkte erhalten werden.

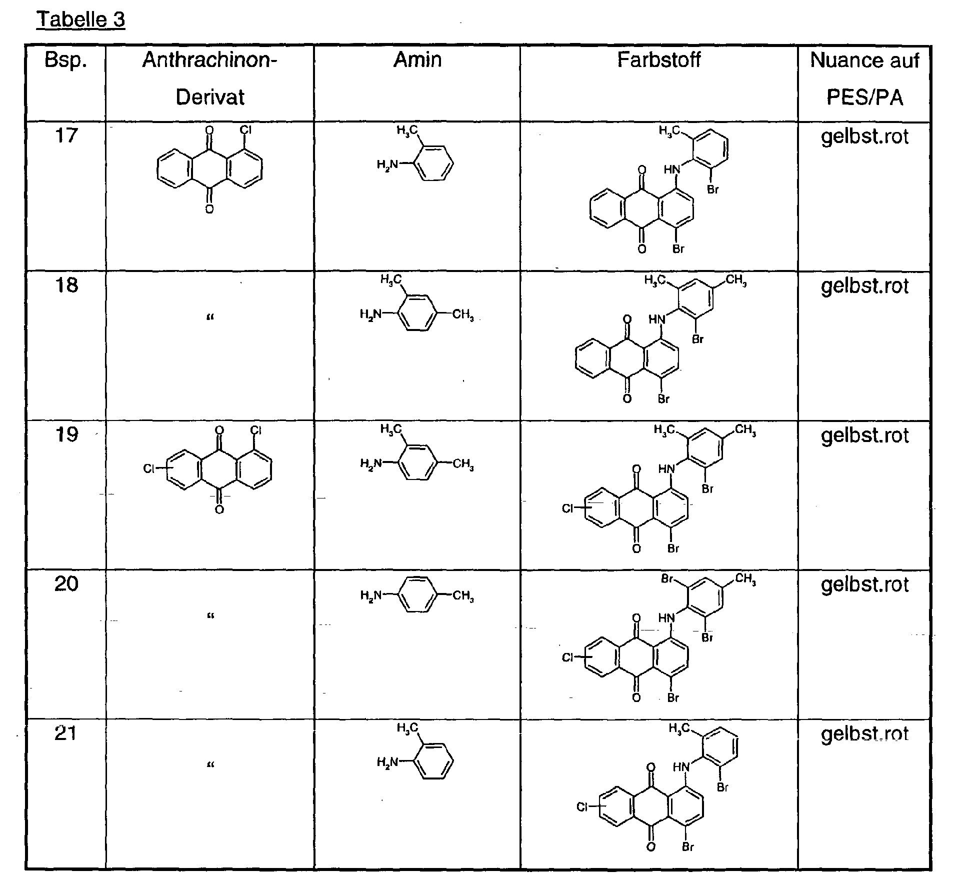

### Beispiel 22

13,9 Gewichtsteile 1,5-Dichloranthrachinon werden zusammen mit 21,0 Gewichtsteilen Mesidin, 10,0 Gewichtsteilen Kaliumacetat, 0,2 Gewichtsteilen Kupfer und 0,2 Gewichtsteilen Kupferchlorür in 100,0 Gewichtsteilen o-Dichlorbenzol 6 Std. bei 170°C gerührt. Das Reaktionsgemisch wird abgekühlt und das ausgefallene Produkt wird abgenutscht und mit wenig o-Dichlorbenzol gewaschen. Man erhält 19,0 Gewichtsteile des Farbstoffes der Formel

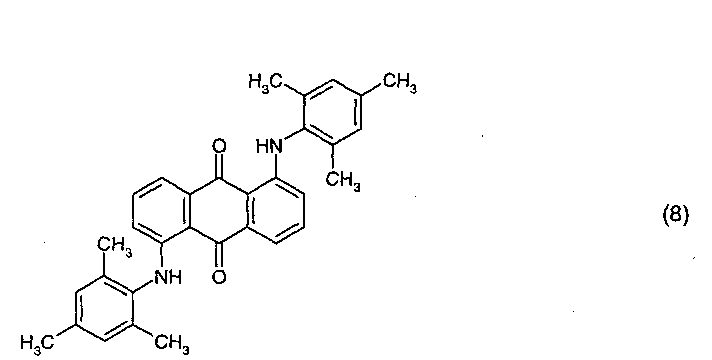

Der Farbstoff färbt Polyester und Polyamid in der Masse in brillanten, lichtechten roten Tönen.

Ersetzt man im Beispiel 22 21,0 Gewichtsteile Mesidin durch äquivalente Mengen eines in der Tabelle 4 in der Kolonne 3 angegebenen Amins, und/oder 13,9 Gewichtsteile 1,5-Dichloranthrachinon durch äquivalente Mengen eines in der Tabelle 4 in der Kolonne 2 angegebenen Anthrachinonderivates, so erhält man ebenfalls Farbstoffe mit guten Eigenschaften.

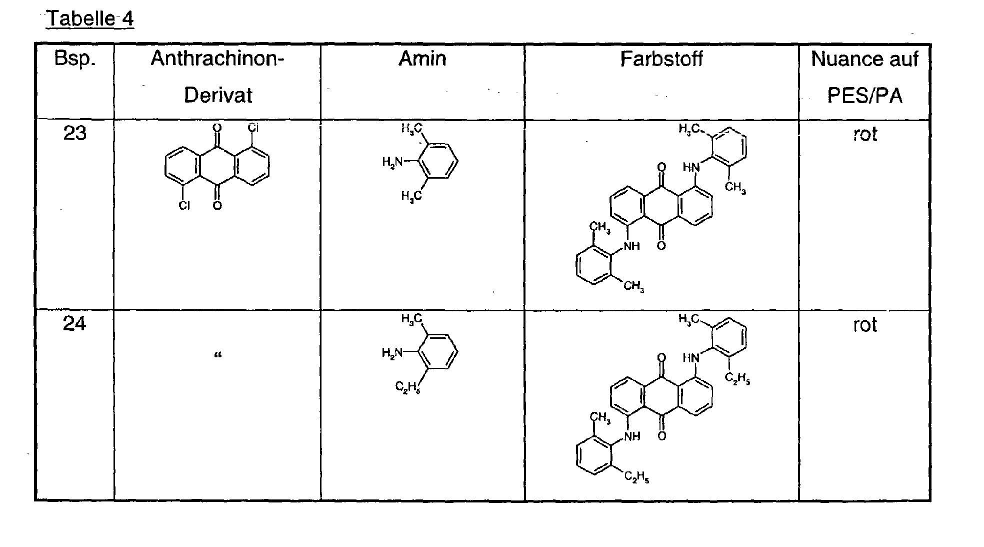

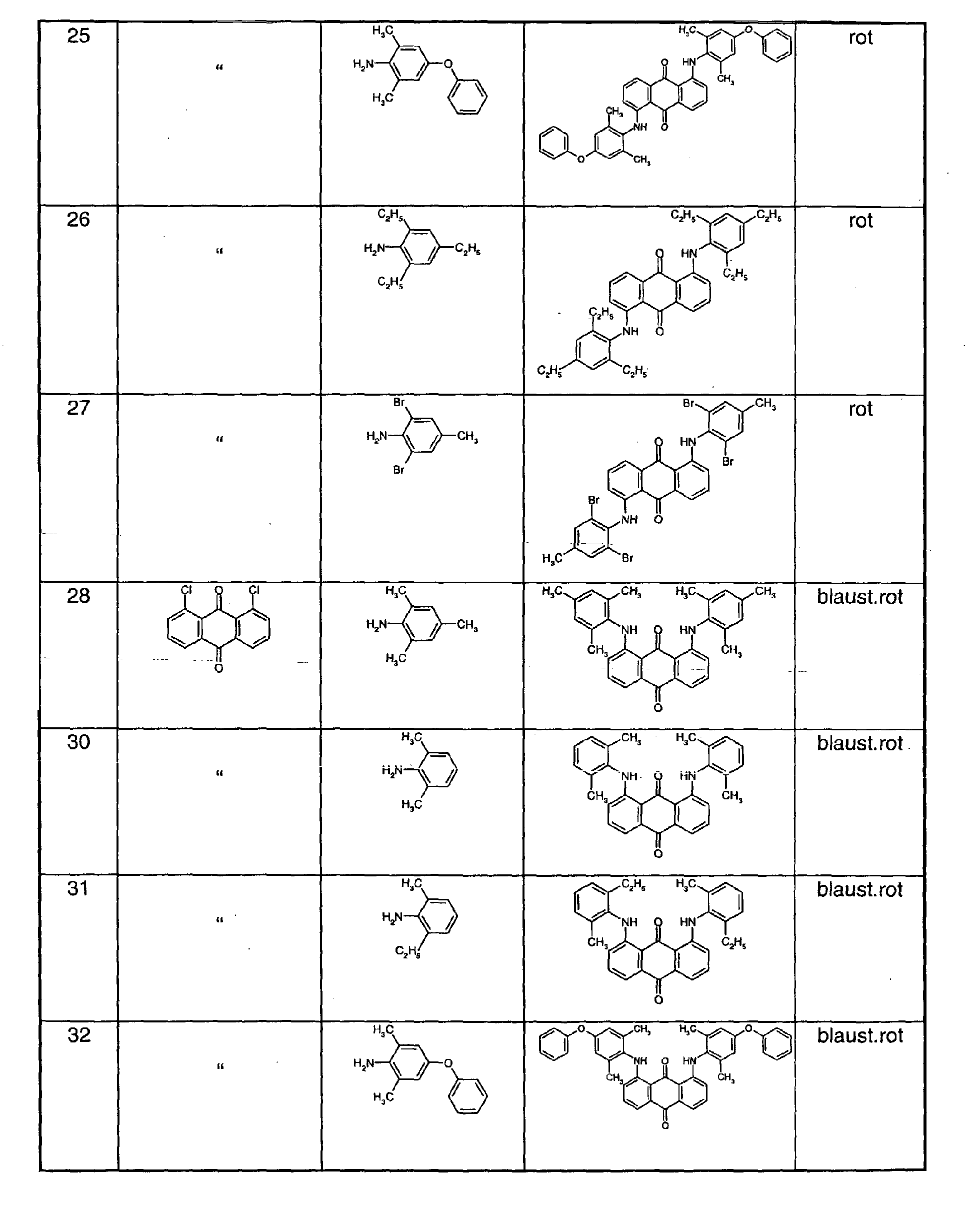

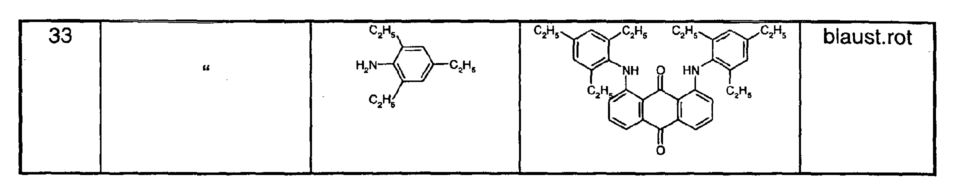

### Beispiel 34

17,0 Gewichtsteile der Verbindung gemäss Beispiel 1 werden portionenweise bei 5-10°C in 100%-iger Schwefelsäure gelöst. Danach werden 7,0 Gewichtsteile N-Hydroxymethylchloracetamid bei 5-10°C zugegeben. Man rührt noch 12 Std. bei 5-10°C weiter und giesst das Reaktionsgemisch auf Eis. Der Niederschlag wird abgesaugt und mit Wasser neutral gewaschen und getrocknet. Man erhält 23,0 Gewichtsteile des Farbstoffes der Formel

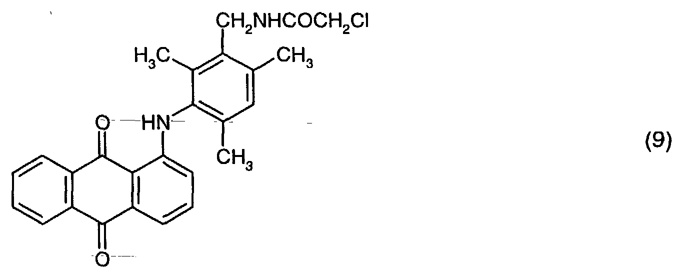

Der Farbstoff färbt Polyester und Polyamid in der Masse in brillanten, lichtechten roten Tönen.

### Beispiel 35

Ersetzt man im Beispiel 34 die 7,0 Gewichtsteile N-Hydroxymethylchloracetamid durch 14,0 Gewichtsteilen N-Hydroxymethylchloracetamid, so erhält man 29,0 Gewichtsteile des Farbstoffes der Formel

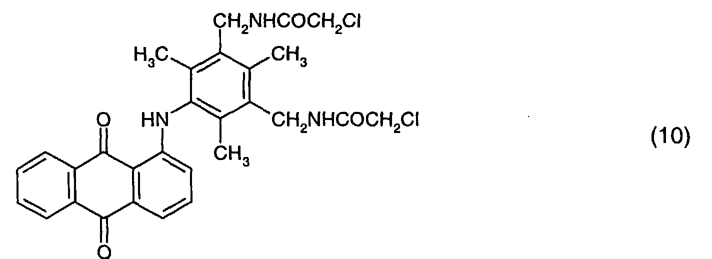

Der Farbstoff färbt Polyester und Polyamid in der Masse in brillanten, lichtechten roten Tönen.

### Beispiel 36

Ersetzt man im Beispiel 35 17,0 Gewichtsteile der Verbindung gemäss Beispiel 1 durch 23,7 Gewichtsteile der Verbindung gemäss Beispiel 22, so erhält man 35,0 Gewichtsteile des Farbstoffes der Formel

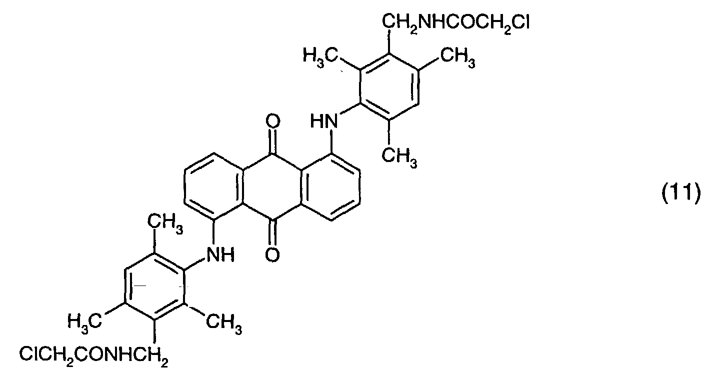

Der Farbstoff färbt Polyester und Polyamid in der Masse in brillanten, lichtechten roten Tönen.

In Analogie zum Beispiel 36 werden die in der Tabelle 5 aufgeführten Farbstoffe erhalten.

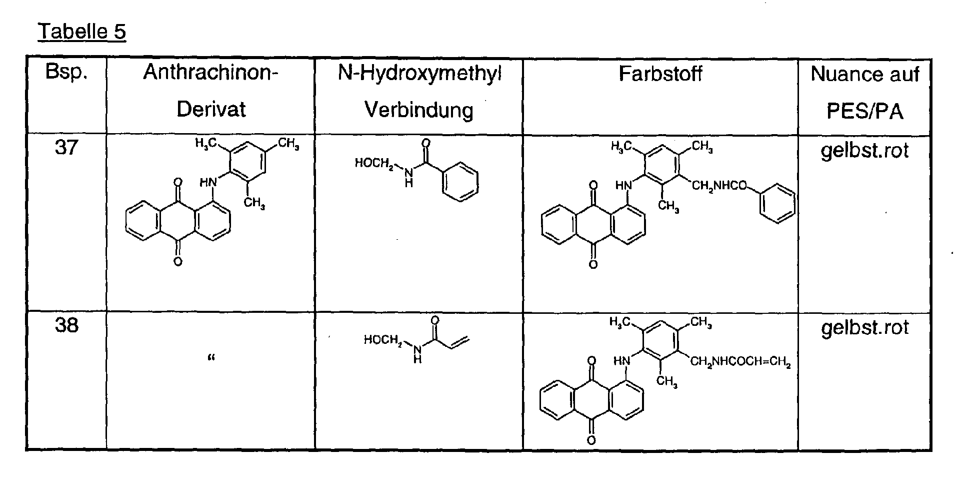

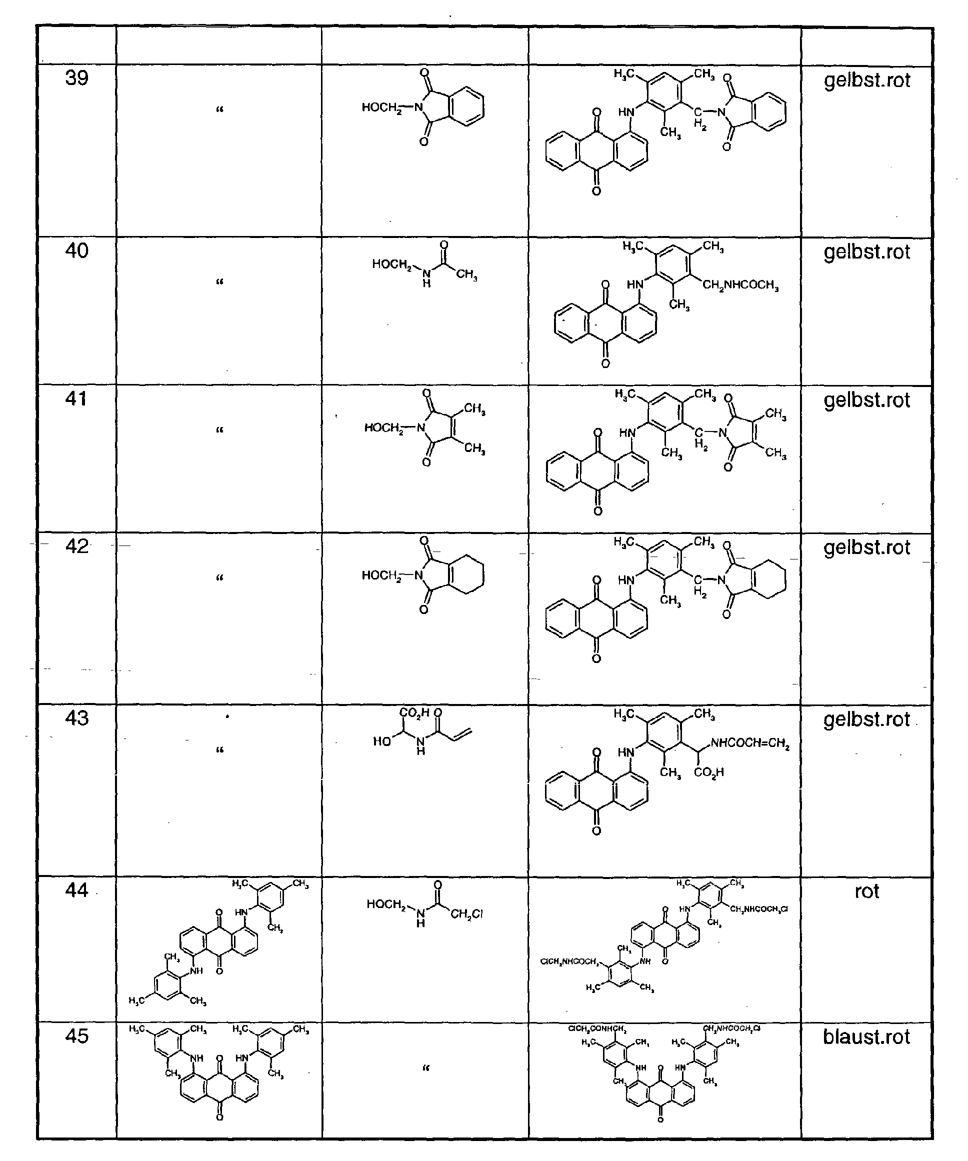

### Beispiel 46

19,9 Gewichtsteile Natrium-Thiophenolat werden in 225,0 Gewichtsteilen Dimethylformamid (DMF) bei 25°C gelöst, dazu werden 25,7 Gewichtsteile 1-Amino-4-chloranthrachinon portionenweise zugegeben. Man rührt 20 Std. bei 25°C und verdünnt mit Wasser. Das ausgefallene Reaktionsprodukt wird abgenutscht, mit wenig Methanol gewaschen und getrocknet. Man erhält 30,0 Gewichtsteile der Verbindung der Formel

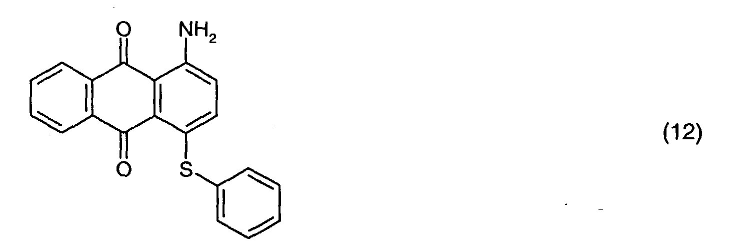

16,5 Gewichtsteile der Verbindung der Formel (12) werden mit 11,0 Gewichtsteilen Bromomesitylen, 2,5 Gewichtsteilen Na-Carbonat, 0,1 Gewichtsteilen Kupfer und 0,1 Gewichtsteilen Kupfer-Chlorürin 50,0 Gewichtsteilen Nitrobenzol 4 Std. am Rückfluss gekocht. Das Reaktionsgemisch wird abgekühlt und das Nitrobenzol mit Wasserdampf abdestilliert. Das ausgefallene Produkt wird abgenutscht und getrocknet. Man erhält 24,0 Gewichtsteile des Farbstoffes der Formel

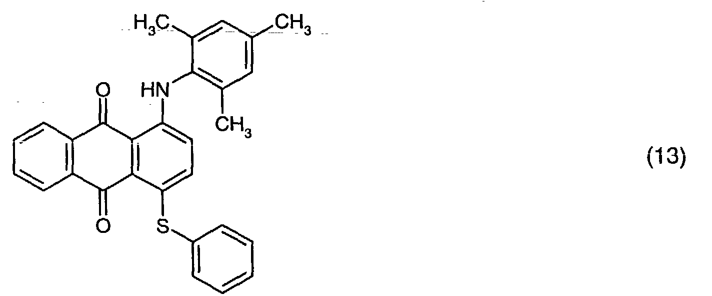

Der Farbstoff färbt Polyester und Polyamid in der Masse in lichtechten rotstichigen blauenTönen.

In Analogie zum Beispiel 46 werden die in der Tabelle 6 aufgeführten Farbstoffe erhalten.

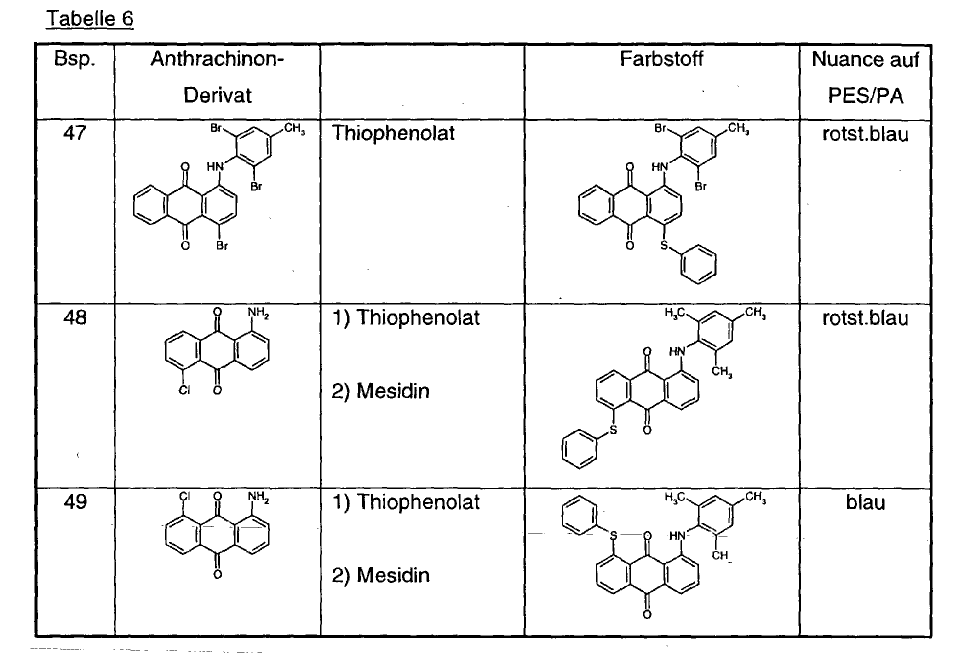

### Beispiel 50:

4,8 Gewichtsteile der Verbindung aus Beispiel 22 werden bei 0-5°C in 30,0 Gewichtsteilen 5%-iges Oleum portionenweise gelöst. Man rührt noch 4 Std. bei 10°C und giesst das Reaktionsgemisch in 200 Gewichtsteile Eis. Der Niederschlag wird abgesaugt, mit Wasser gewaschen, in 100 Gewichtsteilen Wasser angeschlämmt mit 1,5 Gewichtsteilen Hexamethylendiamin neutralisiert und wieder abgesaugt. Man erhält 6,6 Gewichtsteile der Verbindung der Formel:

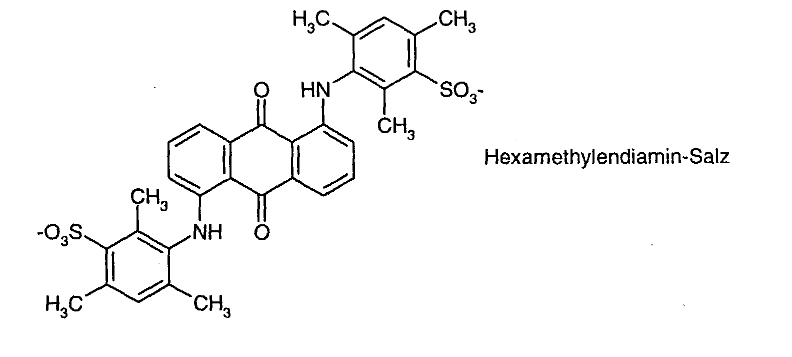

Der Farbstoff färbt Polyamid in der Masse in brillanten, lichtechten roten Tönen.

In Analogie zum Beispiel 50 werden die in der Tabelle 7 aufgeführten Farbstoffe erhalten:

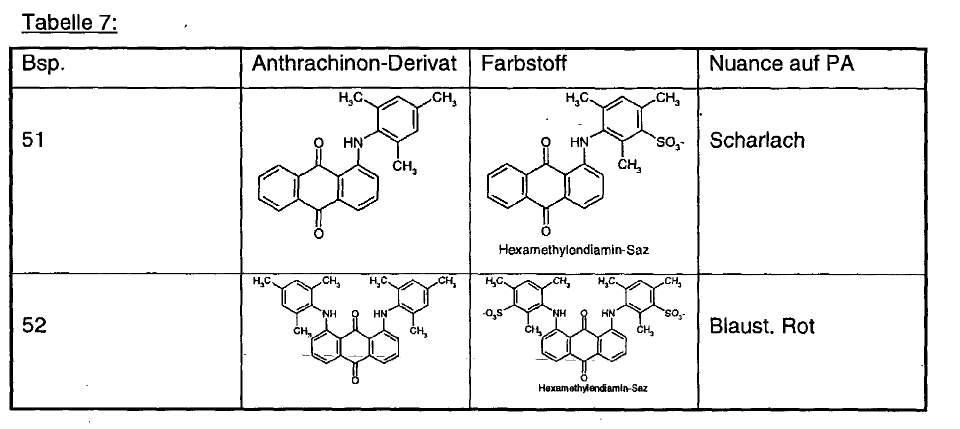

### Färbebeispiel 1:

1200,00 g Polyestergranulat (PET Arnite D04-300, DSM) wird 4 Stunden bei 130°C vorgetrocknet und anschliessend mit
0,24 g des Pigmentfarbstoffes der Formel 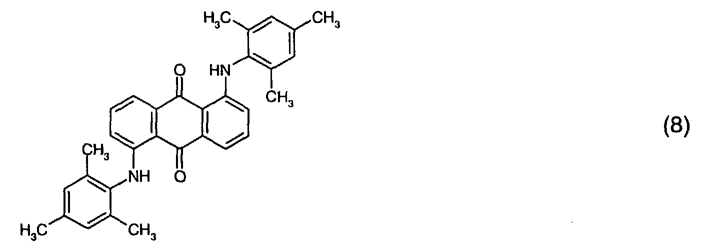 in einem "Roller rack"-Mischapparat während 15 Minuten bei 60 Umdrehungen pro Minute homogen gemischt.
Die homogene Mischung wird in einem Extruder (twin screw 25 mm der Firma Collin, D-85560 Ebersberg) mit 6 Heizzonen bei einer maximalen Temperatur von 275°C extrudiert, mit Wasser abgekühlt, in einem Granulator (Turb Etuve TE 25 der Firma MAPAG AG, CH-3001 Bern) granuliert und anschliessend 4 Stunden bei 130°C getrocknet.

Es resultiert ein rot gefärbtes Polyestergranulat mit guten Allgemeinechtheiten, insbesondere sehr guten Licht- und Heisslichtechtheiten.

### Färbebeispiel 2:

1200,00 g Polyamid-6-granulat (Ultramid B3K, BASF) wird 4 Stunden bei 75°C vorgetrocknet und anschliessend mit
2,40 g des Pigmentfarbstoffes der Formel 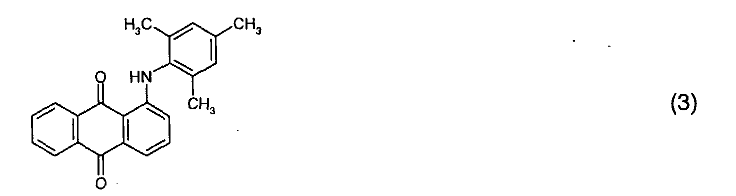 in einem "Roller rack"-Mischapparat während 15 Minuten bei 60 Umdrehungen pro Minute homogen gemischt.
Die homogene Mischung wird in einem Extruder (twin screw 25 mm der Firma Collin, D-85560 Ebersberg) mit 6 Heizzonen bei einer maximalen Temperatur von 220°C extrudiert, mit Wasser abgekühlt, in einem Granulator (Turb Etuve TE 25 der Firma MAPAG AG, CH-3001 Bern) granuliert und anschliessend 4 Stunden bei 75°C getrocknet.
Es resultiert ein violett-rot gefärbtes Polyamidgranulat mit guten Allgemeinechtheiten, insbesondere sehr guten Licht- und Heisslichtechtheiten.

## Patentansprüche

1. Pigmentfarbstoffe der Formel 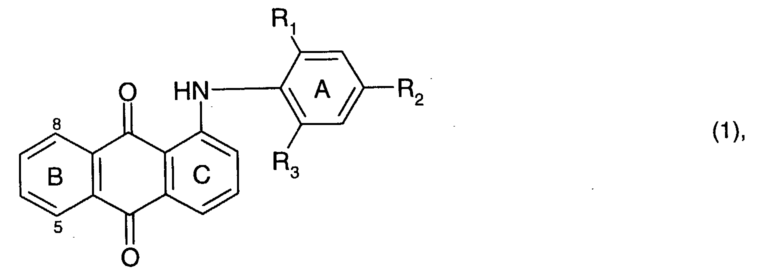 worin R₁ C₁-C₆-Alkyl, C₁-C₆-Alkoxy, Phenoxy oder Halogen, R₂ Wasserstoff, C₁-C₆-Alkyl, C₁-C₆-Alkoxy, Phenoxy, Halogen, Acylamino, -CH₂NHAcyl oder der Rest 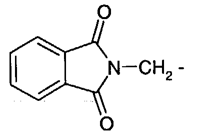 und R₃ C₁-C₆-Alkyl, C₁-C₆-Alkoxy, Phenoxy oder Halogen sind, der Ring A gegebenenfalls weiter durch -SO₃⁻M⁺ substituiert sein kann, worin M⁺ ein Kation ist und die Ringe B und C unsubstituiert oder ein oder mehrfach durch Halogen, Hydroxy, -SH, Amino, C₁-C₆-Alkylamino, C₁-C₆-Alkyl, C₁-C₆-Alkoxy, Phenoxy, Acylamino, C₁-C₆-Thioalkyl oder Thiophenyl weitersubstituiert sein können und der Ring B in Position 5 oder 8 durch einen Rest der Formel 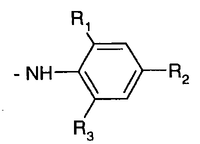 (2), worin R₁, R₂ und R₃ die vorderhand angegebene Bedeutung haben, substituiert sein kann.

2. Pigmentfarbstoffe gemäss Anspruch 1 der Formel 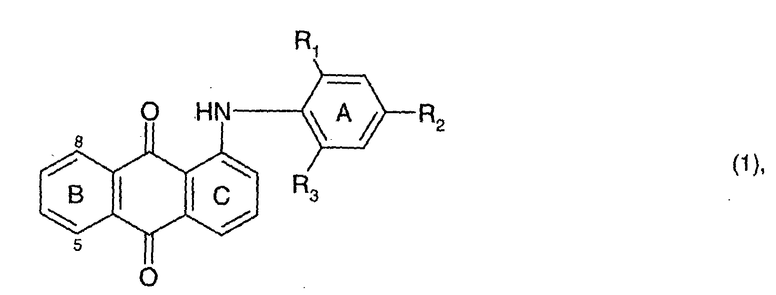 worin R₁ C₁-C₆-Alkyl, C₁-C₆-Alkoxy, Phenoxy oder Halogen, R2 Wasserstoff, C₁-C₆-Alkyl, C₁-C₆-Alkoxy, Phenoxy, Halogen, Acylamino, -CH₂NHAcyl oder der Rest 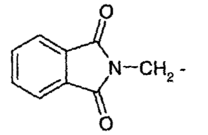 und R₃ C₁-C₆-Alkyl, C₁-C₆-Alkoxy, Phenoxy oder Halogen, sind, und die Ringe B und C unsubstituiert oder ein oder mehrfach durch Halogen, Hydroxy, -SH, Amino, C₁-C₆-Alkylamino, C₁-C₆-Alkyl, C₁-C₆-Alkoxy, Phenoxy, Acylamino, C₁-C₆-Thioalkyl oder Thiophenyl weitersubstituiert sein können und der Ring B in Position 5 oder 8 durch einen Rest der Formel 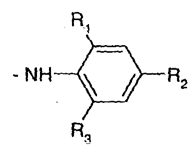 (2), worin R₁, R₂ und R₃ die vorderhand angegebene Bedeutung haben, substituiert sein kann.

3. Pigmentfarbstoffe gemäss einem der Ansprüche 1 und 2, **dadurch gekennzeichnet**, dass R₁ Methyl, Ethyl oder Brom ist.

4. Pigmentfarbstoffe gemäss einem der Ansprüche 1 bis 3, **dadurch gekennzeichnet**, dass R₂ Wasserstoff, Methyl, Ethyl oder Phenoxy ist.

5. Pigmentfarbstoffe gemäss einem der Ansprüche 1 bis 4, **dadurch gekennzeichnet**, dass R₃ Methyl, Ethyl oder Brom ist.

6. Pigmentfarbstoffe gemäss einem der Ansprüche 1 bis 5, **dadurch gekennzeichnet**, dass der Ring B der Ring B unsubstituiert oder in der Position 5 oder 8 durch den Rest der Formel 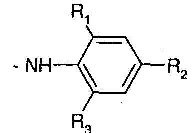 (2) substituiert ist, wobei R₁, R₂ und R₃ Methyl sind und der Ring C unsubstituiert ist.

7. Verfahren zur Herstellung der Pigmentfarbstoffe der Formel (1) gemäss Anspruch 1, **dadurch gekennzeichnet**, dass man 1-Chlor-, 1-Nitro- oder 1-Sulfoanthrachinon mit einem Äquivalent einer Verbindung der Formel 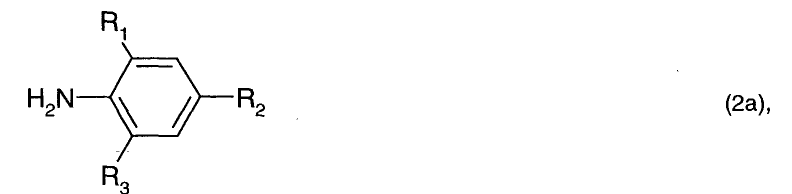 worin R₁, R₂ und R₃ die unter der Formel (1) angegebenen Bedeutungen haben, in Gegenwart von Alkaliacetat, Kupfer und/oder Kupfersalzen und gegebenenfalls in einem organischen Lösungsmittel umsetzt, oder dass man 1,5- oder 1,8-Dichlor-, 1,5- oder 1,8-Dinitro- oder 1,5- oder 1,8-Disulfoanthrachinon mit zwei Äquivalenten einer Verbindung der Formel (2a) in Gegenwart von Alkaliacetat, Kupfer und/oder Kupfersalzen und gegebenenfalls in einem organischen Lösungsmittel umsetzt, und die entstehende Verbindung gegebenenfalls nach üblichen Methoden weitersubstituiert.

8. Verfahren zum Färben von von synthetischen Materialien in der Masse **dadurch gekennzeichnet**, dass man diesen Materialien in der Masse einen Pigmentfarbstoff der Formel (1) einverleibt.

9. Verwendung der Pigmentfarbstoffen der Formel (1) gemäss Anspruch 1 zum Färben von von synthetischen Materialien in der Masse.

10. Die gemäss Anspruch 8 mit einem Pigmentfarbstoff der Formel (1) gemäss Anspruch 1 gefärbten synthetischen Materialien.
